# EUROPEAN PATENT APPLICATION

(11) **EP 1 632 693 A2**
(43) Date of publication of application: **08.03.2006**
(21) Application number: 05255336.9
(22) Date of filing: 31.08.2005
(51) Int. Cl.: F16G 11/00

(54) **Method for standardizing hardware for synthetic cables**

(30) Priority: 02.09.2004 US 933048
(71) Applicant: Bright Technologies LLC, Tallahassee, Florida 32309 (US)
(72) Inventor: Campbell, Richard V., Florida 32309 (US)
(74) Representative: Moore, Derek

(57) **Abstract**

A method of applying a jacket (14, 22) of varying thickness around the exterior of a cable (10) in order to make the cable diameter both standard and uniform. In this context, uniform means devoid of fluctuations. Standard means conforming to a predetermined anchor size. The number of anchors (18) needed to cover a range of cable diameters and types may thereby be greatly reduced. The method also allows the use of standardized cutting and processing equipment

## Description

This invention relates to the field of synthetic cables. More specifically, the invention comprises a method for applying a jacket of varying thickness to a synthetic cable in order to facilitate the use of standardized termination hardware.

Devices for mounting a termination on the end of a wire, rope, or cable are disclosed in detail in copending U.S. Application Serial No. 60/404973 to Campbell, which is incorporated herein by reference.

The term "synthetic cable" is generally understood to mean a cable made of non-metallic, man-made materials. Examples include NYLON, polyethylene, KEVLAR, and PBO. The individual components of a synthetic cable are known by various terms. Throughout this application, these components will be referred to as "strands". Some type of fitting must typically be added to a cable in order to transmit a load to the cable. An old example of this idea is to wrap one end of a cable back upon itself - usually around an "eye" or "thimble" device - then clamp the cable to itself with one or more U-bolts. The resulting assembly on the end of the cable is referred to as a "termination".

It is known to terminate the strands of a synthetic cable by locking them into an anchor. The strands can be locked in place using a mechanical clamp, solidified potting compound, or other known approaches. The use of potting compound is perhaps the most common. For this approach, the strands are typically splayed into a diverging pattern and infused with liquid potting compound (using a variety of known techniques). The liquid potting compound is any substance which transitions from a liquid to a solid over time. The most common example would be a cross-linking adhesive such as an epoxy. Those skilled in the art know that such adhesives use two separate liquids which cross-link when mixed together. Such a liquid is mixed just prior to wetting the strands.

The strands are typically splayed into a diverging pattern and infused with liquid potting compound (using a variety of known techniques). The wetted strands are at some point placed in a cavity within an anchor (in some cases prior to wetting and in some cases after wetting), so that when the liquid potting compound hardens the strands will be locked to the anchor. The anchor and the portion of cable locked therein are then collectively referred to as a "termination".

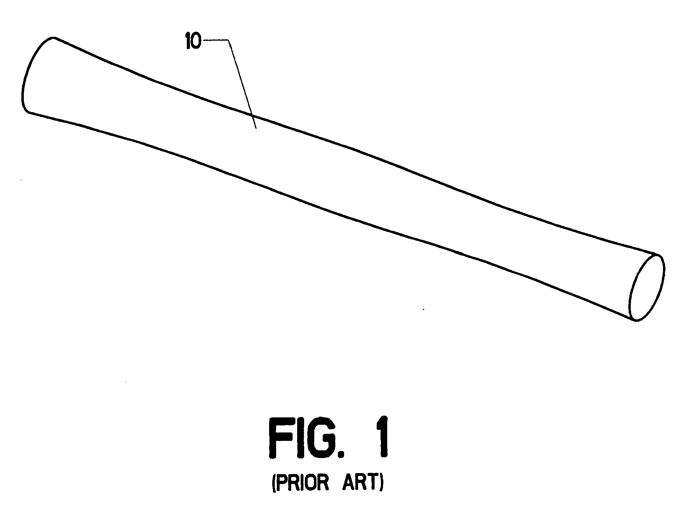

FIG. 1 shows a prior art synthetic cable 10. It includes a bundle of strands. The strands are often woven or braided together. In other cases they are simply twisted or aligned in parallel. The reader will observe that the diameter of the cable fluctuates along its length. This effect is actually exaggerated in the view, so that it may more easily be observed. Such variations in diameter are quite significant when it comes time to place the cable into an anchor, however, since the anchor's internal diameter must generally fit snugly around the cable.

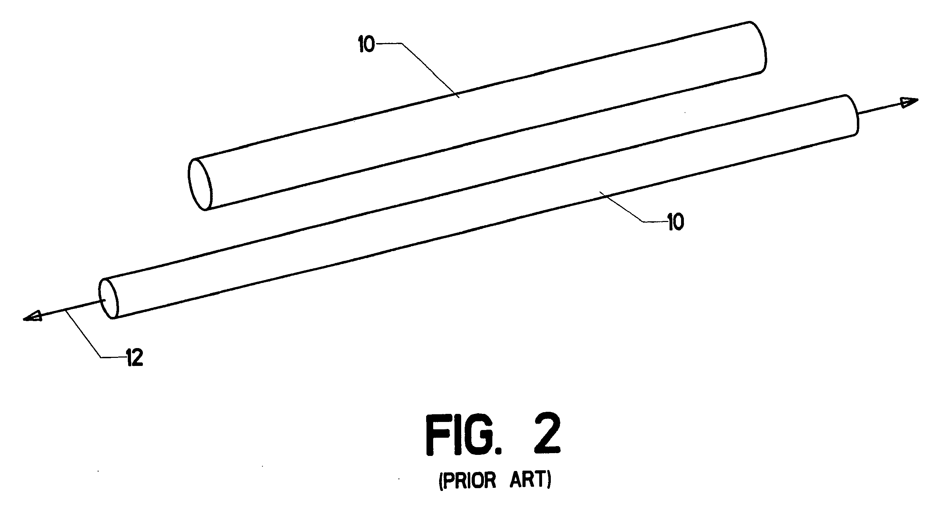

FIG. 2 shows another phenomenon which is typical of synthetic cables. The upper cable 10 in the view is under no tension. The lower cable 10 has been placed under applied tension 12. The cable tends to elongate and the overall diameter tends to shrink. Those skilled in the art will know that many synthetic fibers have a high tensile modulus, and do not elongate visibly under tension. However, the phenomenon shown in FIG. 2 does not represent the elongation of individual fibers. Rather, it results from the fact that the individual strands - which can be very flexible and very fine - do not remain well aligned when not under tension. When in a relaxed state, voids develop between the strands, which condition results in an apparently increased overall diameter for the cable and in a reduced overall length (since the individual strands are curved rather than straight). When placed under tension, the strands align and straighten, resulting in an apparent reduction in diameter and increase in overall length. Within the industry, this phenomenon is referred to as "constructional stretch".

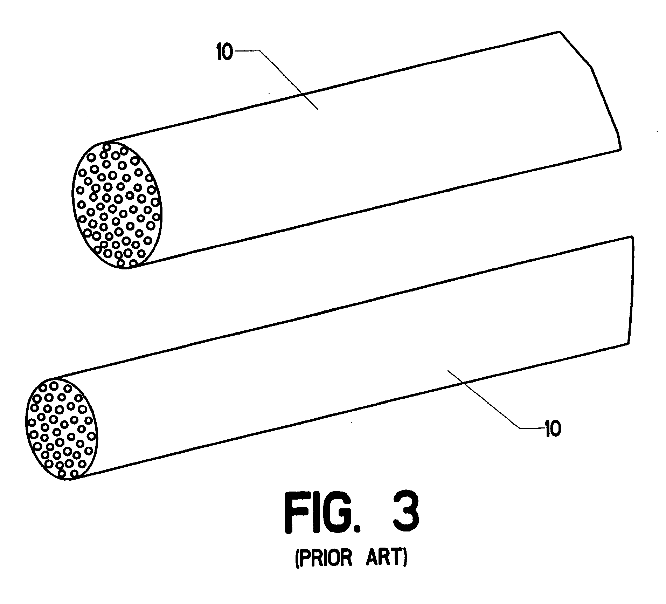

FIG. 3 illustrates another problem inherent in the prior art. The two cables shown have different diameters. For a proper fit, an anchor that is to be attached to such cables must have its internal dimensions matched to the diameter of the specific cable. By "matched" the reader should understand that an appropriate and generally small clearance must exist between the passage through an anchor and the cable which is to be inserted in the anchor. There must be enough room to fit the components together, but not enough room to allow a misaligned or "sloppy" fit. Thus, an anchor which is particularly suited to a particular cable diameter must be available.

The size of a cable is often optimized for a particular application. This will result in many different cable diameters. Traditionally, therefore, many different anchor sizes will be needed as well. While it is certainly possible to provide a large number of different anchor sizes, a more standardized solution is desirable.

Those skilled in the art will know that the anchors used to create a complete and terminated cable are often a large percentage of the total cost. This is particularly true for low-volume, specialized anchors. Such anchors can comprise 70-95% of the total cost of the completed cable. On the other hand, a standardized and mass-produced anchor can be quite inexpensive - sometimes as little as 2% of the cost of a "custom" anchor. The reader will thereby appreciate the advantage of a method which allows a single anchor to be used over a range of cable sizes.

The present invention comprises a method of applying a jacket of varying thickness around the exterior of a cable in order to make the cable's diameter both standard and uniform. In this context, "uniform" means devoid of fluctuations. "Standard" means conforming to a predetermined anchor size.

The number of anchors needed to cover a range of cable diameters and types may thereby be greatly reduced. The method also allows the use of standardized cutting and processing equipment. A variety of techniques for applying the jacket are disclosed, including extruding, dipping, molding, and spraying. A portion of the jacket extends into the anchor to form the desired interface. In some applications, it may be desirable to remove the portion of the jacket lying outside the anchor or anchors once the terminations are in place. Once the termination is completed, it is also possible to remove the entire jacket.

Preferred embodiments of the invention will now be described by way of example with reference to the accompanying drawings in which:-
FIG. 1 is a perspective view showing a prior art cable.
FIG. 2 is a perspective view showing the effect of tension on a prior art cable.
FIG. 3 is a perspective view showing cables having different diameters.
FIG. 4 is a perspective view showing how a jacket of varying thickness can be applied to a cable.
FIG. 5A is a sectional perspective view showing typical anchors.
FIG. 5B is a sectional perspective view showing the cable strands inside the anchors.
FIG. 5C is a sectional perspective view showing the cable strands after they have been potted in place.
FIG. 6 is a perspective view showing a completed termination.
FIG. 7 is a perspective view with a cutaway, showing an extruding head.
FIG. 7B is a perspective view with a cutaway, showing an extruding head having a jacket annulus insert.
FIG. 8 is a perspective view, showing a molding operation.
FIG. 9 is a perspective view, showing a cable with a jacket added.
FIG. 10 is a perspective view, showing a cutting operation.
FIG. 11 is a perspective view, showing a cable after the cutting operation.
FIG. 12 is a perspective view showing a jacket being added to a cable by shrinking.
FIG. 13 is a perspective view showing a cable being drawn through a sizing die.

### REFERENCE NUMERALS IN THE DRAWINGS

| | | | |
|---|---|---|---|
| 10 | cable | 12 | applied tension |
| 14 | thick jacket | 16 | expanding cavity |
| 18 | anchor | 20 | cylindrical bore |
| 22 | thin jacket | 24 | potted region |
| 28 | lower mold | 30 | upper mold |
| 34 | mold cavity | 36 | jacket material feed |
| 38 | molded jacket | 40 | cutter |
| 42 | extruding head | 44 | plastic infeed |
| 46 | plastic manifold | 50 | sizing die |
| 52 | standard diameter jacket | 54 | enlarged jacket |
| 80 | cable orifice | 82 | jacket annulus |
| 84 | shrinkable jacket | 88 | feed tube |
| 90 | jacket annulus insert | | |

In the prior art it is known to deposit a jacket over the exterior of a synthetic cable. This jacket my be made of many materials, with plastic materials being the most common. One typical method of depositing such a jacket is by extrusion. This process is sometimes called "coextrusion" referring to the fact that the cable and the jacket material are united while the cable is passing through an extruding head.

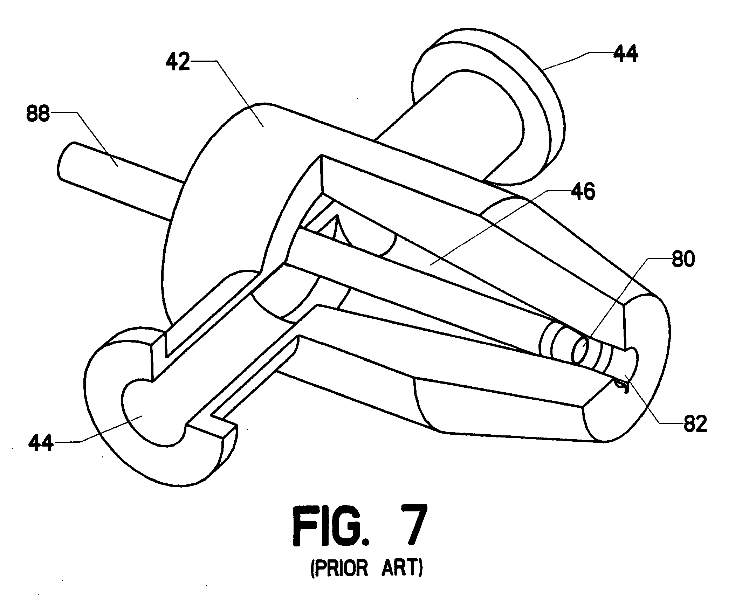

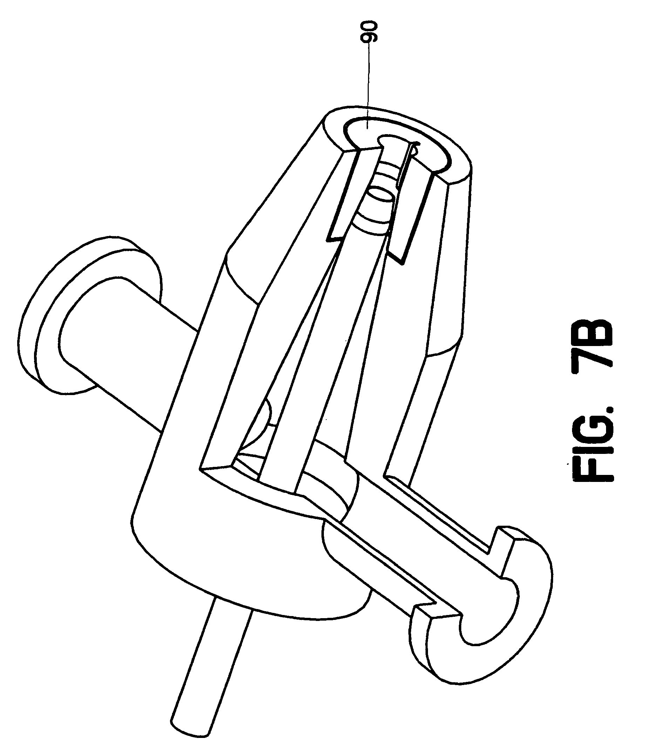

FIG. 7 shows extruding head **42.** A synthetic cable is fed through feed tube **88,** ultimately passing out through cable orifice **80** in a direction toward the viewer. Plastic is fed into the device through a pair of plastic infeeds **44,** after which it accumulates in plastic manifold **46.** The plastic is in a molten state, having been heated and pressurized by suitable processing equipment (typically an auger feed).

As the cable passes out cable orifice **80** a sheath of jacket material is formed over the cable through jacket annulus **82.** The jacket material solidifies on the cable, thereby creating a unified assembly.

Such extruding heads can be modified to produce jackets having many different thicknesses. FIG. 7B shows an extruding head **42** in which jacket annulus **82** is mounted in jacket annulus insert **90.** This insert can be removed from the extruding head and replaced with another insert having a different diameter. As an example, a production line might employ a set of jacket annulus inserts which are sized to produce jackets having thicknesses of approximately 0.005, 0.010, 0.015, 0.020, and 0.025 (Note that the thickness will actually vary over a single cable's length, since the cable's diameter varies. The extruding head ensures that the external diameter is uniform. Because the internal diameter varies with the varying cable diameter, the thickness may vary). Feed tube **88** can likewise be made removable so that cables of different sizes can be run through the same extruding head.

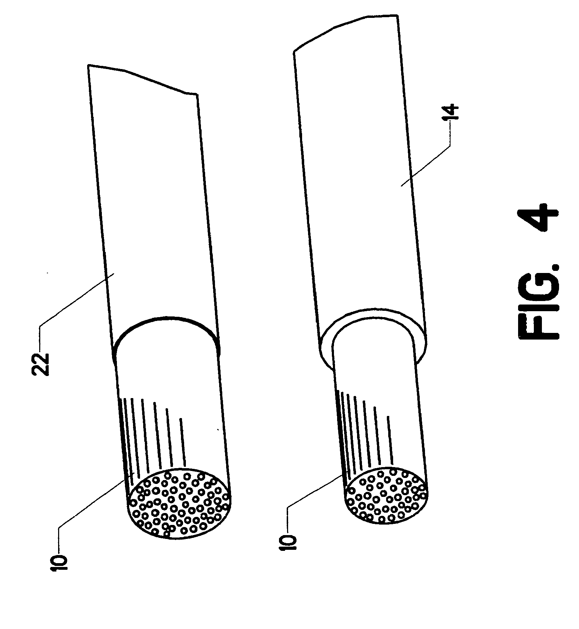

FIG. 4 shows two cables which have had a jacket applied. The reader will observe that the two cables have different diameters. The lower cable in the view has had a thick jacket **14** applied, whereas the upper cable in the view has had a thin jacket **22** applied. The result is that the outside diameter of the two jackets is the same, even though they encase two cables having significantly different diameters. The external diameter of the two jacketed cables is the same, which is the important feature in the present context.

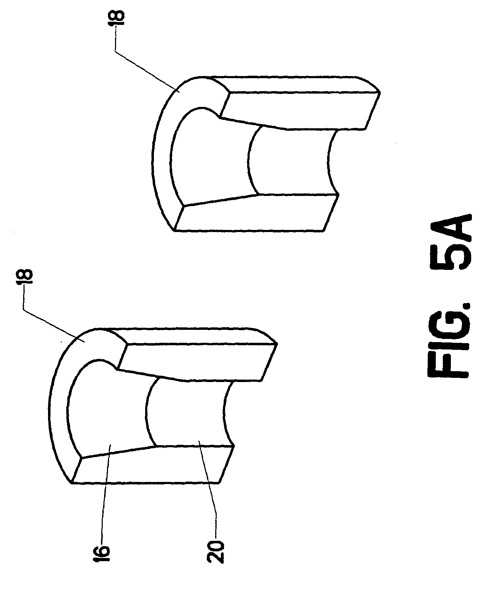

FIG. 5A shows two anchors 18 sectioned in half in order to expose the internal features. Those skilled in the art will know that a cable can be locked into such an anchor by placing the exposed cable strands through cylindrical bore 20 and splaying them outward within expanding cavity 16. Liquid potting compound is infused throughout the strands (either before or after they are placed within the expanding cavity). The liquid potting compound then solidifies, thereby locking the cable to the anchor and forming a completed "termination" (Again, the reader should bear in mind that methods other than potting are available for locking the strands within the anchor. The present invention can apply to these other methods as well).

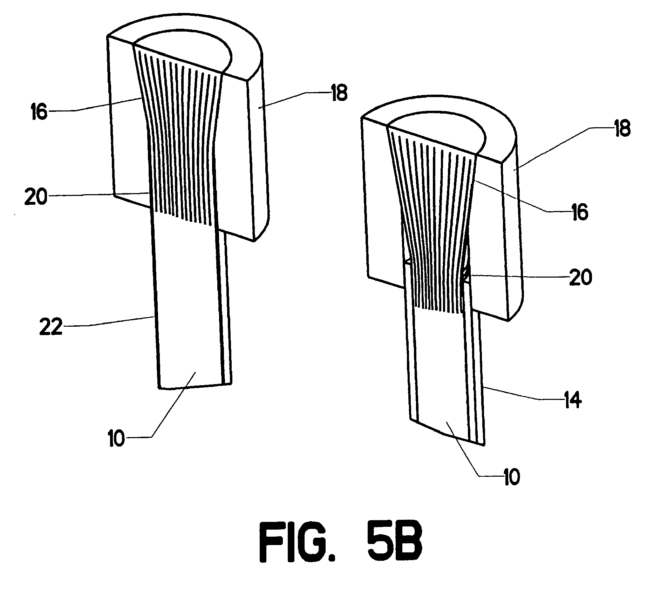

The reader will note that the two anchors shown in FIG. 5A have identical dimensions. Under the prior art, this fact would means that they are suited to one and only one cable diameter. In FIG. 5B, the two cables shown in FIG. 4 (with a portion of the jackets being removed to expose the end strands) have been placed into the two anchors 18 (still a sectional view). The exposed strands have been splayed within expanding cavity 16. because the external diameter of the two jackets is the same, they both fit snugly within cylindrical bore 20.

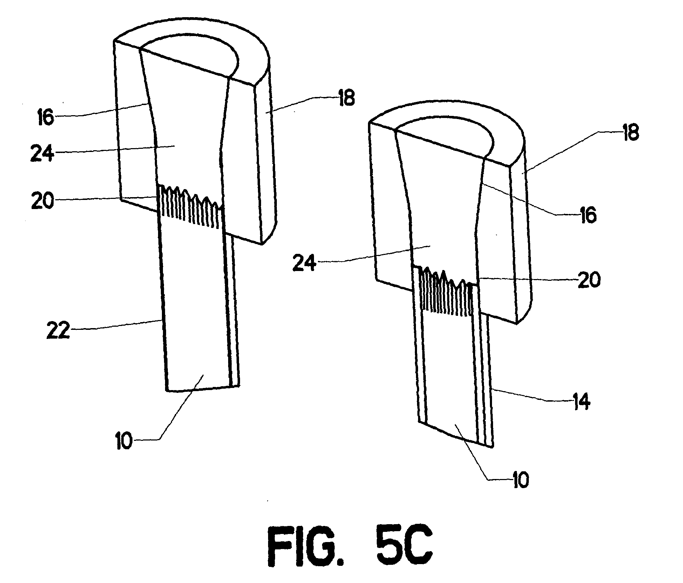

The exposed strands are infused with liquid potting compound (Again - this can be done either before or after they are placed within the anchor). The liquid potting compound is then allowed to harden into a solid. FIG. 5C shows the two assemblies after the potting compound has hardened to form potted regions 24.

In studying FIGs. 5B and 5C, an advantage of the present inventive process for potted termination will be apparent: The use of varying jacket thicknesses can allow a smaller cable to be mated with an anchor designed for a larger cable. The thicker jacket shown in the right hand assembly of FIG. 5B seals the cable side of the anchor and prevents the liquid potting compound from running out. The gap formed around the portion of splayed strands nearest the jacket is filled by the potting compound.

The strength of the termination is not significantly compromised by using this process, and may even be increased. The potting compound fills the gap resulting from the use of a smaller cable, thereby centering the strands within expanding cavity 16 (Assuming, of course, that the jacket application process is well controlled to center the strands within the external diameter of the jacket). As explained previously, the cable in its unjacketed state may fluctuate significantly in diameter and the individual strands may not be well-aligned. The addition of the jacket tends to reduce both these problems. Not only does it provide a desired overall diameter, it may often reduce the overall diameter by compacting the strands more closely together. It therefore produces more consistent and repeatable geometry.

An example using actual dimensions is illustrative: The cable on the right side of FIG. 5B has a diameter of 0.214 inches. The cable on the left has a diameter of 0.240 inches. Cylindrical bore 20 has a diameter of 0.250 inches. Thin jacket 22 is therefore extruded to a thickness of 0.005 inches whereas thick jacket 14 is extruded to a thickness of 0.018 inches (Note that the increase in diameter is twice the jacket thickness). Thus, by using a jacket having a specific thickness, an anchor having a bore of 0.250 can accommodate a cable having a diameter in the range of about 0.210 to 0.240. The jacket thickness is selected to increase the external diameter of the cable to the desired value.

A second anchor can be provided having a cylindrical bore 20 measuring 0.300. Using jackets of varying thicknesses this second anchor could accommodate a cable having a diameter in the range of about 0.245 to 0.290. The table below gives one possible scenario for implementing the present inventive method in terminating cables having a diameter of 0.110 to 0.190 inches:

| **Anchor Cyl. Bore** | **Cable Diameter** | **Jacket Thickness** |
|---|---|---|
| 0.150 | 0.110 | 0.020 |
| 0.150 | 0.120 | 0.015 |
| 0.150 | 0.130 | 0.010 |
| 0.150 | 0.140 | 0.005 |
| 0.200 | 0.150 | 0.025 |
| 0.200 | 0.160 | 0.020 |
| 0.200 | 0.170 | 0.015 |
| 0.200 | 0.180 | 0.010 |

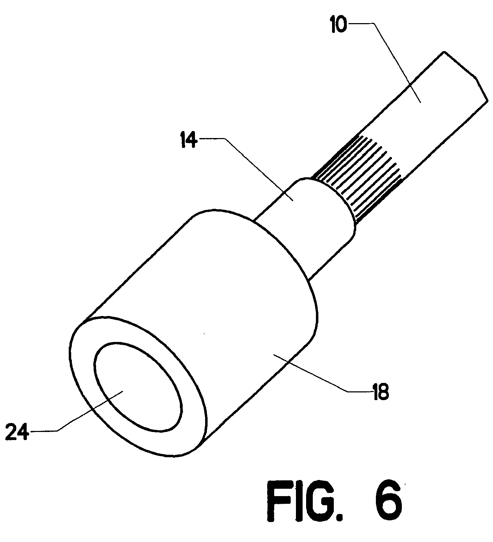

In this example, the reader will perceive how two sizes of anchor can accommodate nine cable sizes. The process also eliminates manufacturing problems resulting from fluctuations in a cable's diameter. Different jacket thicknesses are used to "standardize" the cable's external diameter, meaning that (1) A desired external diameter is achieved; and (2) That external diameter is made uniform over the cable's length. FIG. 6 shows a completed cable termination in a non-sectional view. Note that for this embodiment, the jacket has been removed except for the portion proximate the anchor.

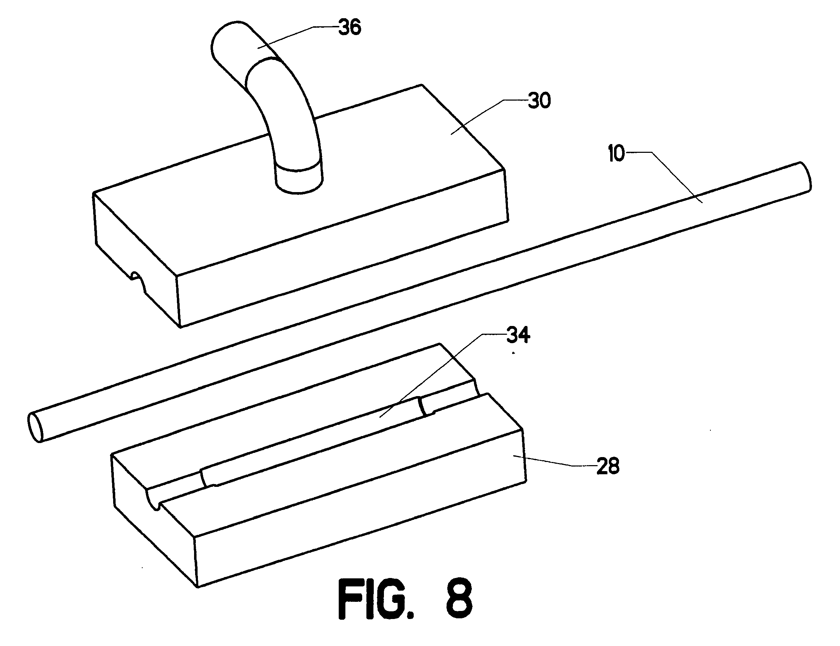

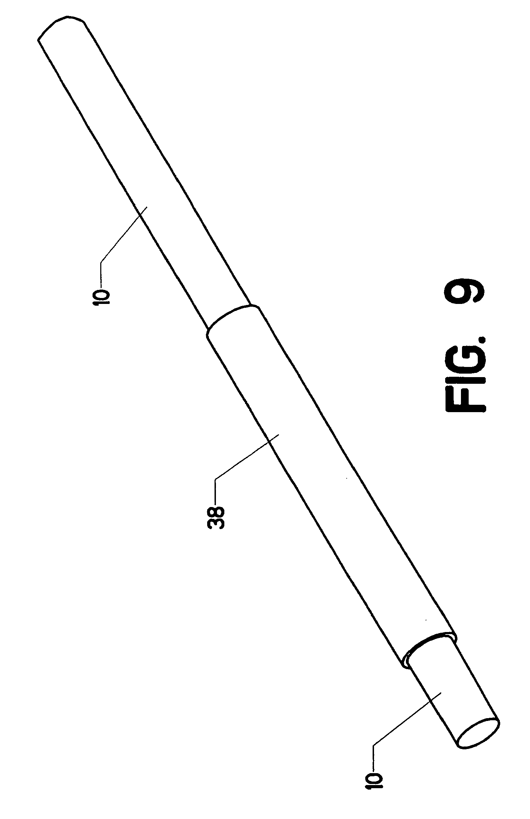

Although extrusion has been described in detail, it is by no means the only available method for adding a properly sized jacket to a cable. In many instances, the jacket is only needed for the specific region where the anchor will be attached. It may therefore be wasteful to apply a jacket over the entire length of the cable. This may be particularly true when an anchor is to be added in the middle of a cable rather than on one end. FIG. 8 shows a jacket being added by a molding process. Cable 10 is clamped between upper mold 30 and lower mold 28, so that mold cavity 34 lies around the cable. Molten plastic is then fed in through jacket material feed 36. Once the jacket material solidifies, the mold is opened. FIG. 9 shows the result. A molded jacket 38 has been placed over a short length of cable 10.

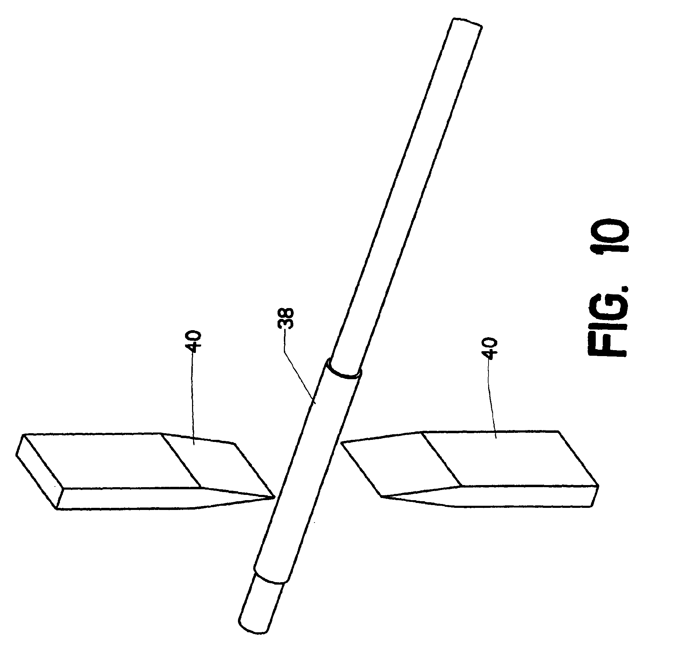

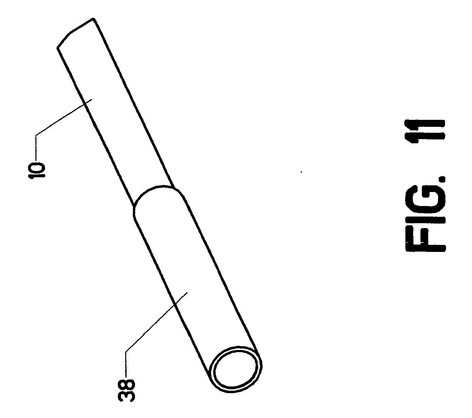

Of course, the molding approach can be used for anchors to be placed on a cable's end as well. The encapsulating jacket actually holds the strands in a stable state. This greatly facilitates cutting and other operations. FIG. 10 shows molded jacket 38 placed between a pair of opposing cutters 40. These close to cut the cable. FIG. 11 shows the same cable after it has been cut. The end facing the viewer can then have a small length of the jacket stripped away in preparation for the termination process. The length of jacket shown can serve the same purpose as for the jacket extruded over the entire length of the cable.

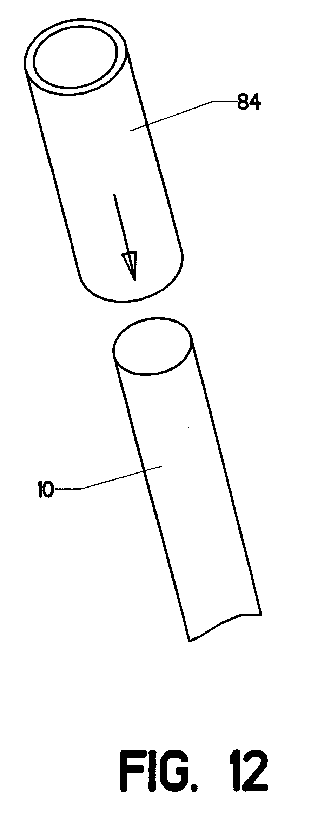

FIG. 12 shows another approach to applying a jacket. Shrinkable jacket 84, which initially has an internal diameter greater than the cable, is slipped into the desired position. It is then shrunken over the cable - typically by a heating process. If the shrinkable jacket is carefully sized (including a suitable initial and final thickness) it can produce a finished jacket having the desired thickness. Its external diameter, however, tends to vary with the diameter of the underlying cable. Thus, a secondary operation is desirable.

Jackets can also be applied over some or all of the cable by dipping or spraying. These processes tend to produce varying jacket thicknesses, as for the heat shrinking approach. Thus, secondary operations may be needed to produce the desired uniform external diameter for these as well.

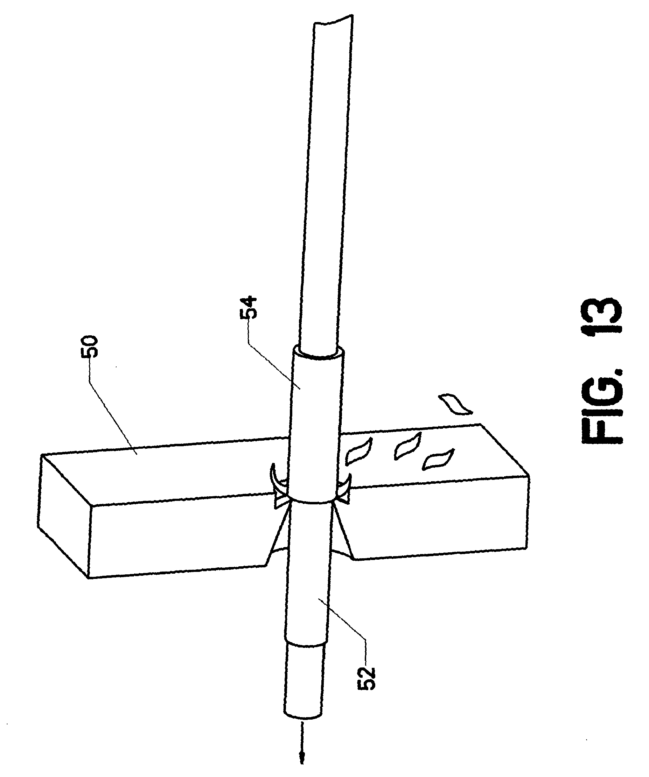

FIG. 13 shows one such secondary operation. A cable is being drawn through sizing die 50 (The die is sectioned in half to aid visualization). Enlarged jacket 54 - which possesses a varying diameter - is cut down to standard diameter jacket 52 (which possesses a uniform diameter).

The jacket employed in the inventive process can be described as a "sizing jacket" since it effectively resizes the cable for use in a standard anchor. The term "sizing jacket" will be understood to mean a jacket having a carefully selected and uniform external diameter which conforms to the internal diameter of a standardized anchor (allowing for appropriate clearances).

Thus, the proposed method can be generally described as follows:
1. Defining a set of "standard" anchors, each one of which is intended to cover a range of cable sizes;
2. Taking a cable of any appropriate size and adding a sizing jacket of uniform external diameter, over at least a portion of the cable's length (which may in some instances mean the entire length), so that the overall diameter of the cable conforms to one of the available standard anchors; and
3. Locking the jacketed cable into one of the standard anchors, using any known method, to form a completed termination.

Once the termination is formed and set, the portion of the jacket lying outside the anchor my optionally be removed by any desired method. The portion of the jcaket actually lying inside the anchor can be pulled free in some applications as well. In still other applications, it is advantageous to leave the entire jacket in place.

The reader will thereby appreciate how the proposed method reduces cost and complexity by allowing the use of standardized anchors. The reader will also appreciate that the addition of a jacket having a uniform shape and outer diameter can mitigate the imperfections found in the underlying cable.

Although the preceding description contains significant detail, it should not be construed as limiting the scope of the invention but rather as providing illustrations of the preferred embodiments of the invention. As an example, all the illustrations have shown the exposure of a length of strands by stripping away the jacket prior to creating a potted termination. Those skilled in the art will know that certain types of terminations are designed to mechanically grip the jacket and encased strands by compression, thereby eliminating the need to strip a portion of the jacket (An "Esmet" termination is one such type). The present inventive process works for a this type of termination as well, since a uniform diameter is beneficial for the mechanical grip. Thus, the scope of the invention should be fixed by the following claims rather than any examples given.

## Claims

1. A method of applying a termination to an end of a cable (10), said cable (10) being comprised of strands, and said cable (10) having a variable cable diameter, comprising:
a. providing an anchor (18) having an internal passage (20) with a passage diameter;
b. applying a jacket (14,22) over a portion of said cable (10) proximate said end of said cable (10);
c. varying the thickness of said jacket (14, 22) along said portion of said cable (10) proximate said end of said cable (10) so that the external diameter of said jacket (14, 22) is uniform, and so that said external diameter of said jacket (14, 22) fits within said passage diameter;
d. exposing a length of said strands of said cable (10); and
e. locking said length of exposed strands within said internal passage of said anchor (18).

2. A method of applying a termination to an end of a cable (10), said cable (10) being comprised of strands, and said cable (10) having a cable diameter, comprising:
a. providing an anchor (18) having an internal passage (20) with a passage diameter, wherein said passage diameter is significantly larger than said cable diameter;
b. applying a jacket (14, 22) over a portion of said cable (10) proximate said end of said cable (10);
c. Providing a thickness for said jacket (14, 22) which provides an outer jacket diameter that fits securely within said passage diameter;
d. exposing a length of said strands of said cable (10); and
e. locking said length of exposed strands within said internal passage of said anchor (18).

3. A method of applying a termination to an intermediate point on a cable (10), said cable (10) being comprised of strands, and said cable (10) having a variable cable diameter, comprising:
a. providing an anchor (18) having an internal passage (20) with a passage diameter;
b. applying a jacket (14, 22) over a portion of said cable (10) proximate said intermediate point of said cable (10);
c. varying the thickness of said jacket (14, 22) along said portion of said cable (10) proximate said intermediate point of said cable (10) so that the external diameter of said jacket (14, 22) is uniform, and so that said external diameter of said jacket (14, 22) fits within said passage diameter;
d. exposing a length of said strands of said cable (10); and
e. locking said length of exposed strands within said internal passage of said anchor (18).

4. A method as recited in claim 1, 2 or 3, wherein said step of locking said length of exposed strands within said internal passage of said anchor (18) is accomplished by infusing said strands with liquid potting compound and allowing said liquid potting compound to harden into a solid while said strands lie within said internal passage.

5. A method as recited in claim 4, wherein said external diameter of said jacket (14, 22) fits tightly enough within said internal passage to prevent said liquid potting compound seeping past said jacket (14, 22).

6. A method as recited in claim 3, 4 or 5, wherein said liquid potting compound is a cross-linking adhesive.

7. A method as recited in any preceding claim, further comprising:
after said length of strands has been locked within said internal passage, removing said jacket (14, 22).

8. A method as recited in any preceding claim, further comprising:
after said length of strands has been locked within said internal passage, removing a portion of said jacket (14, 22) lying outside said anchor (18).

9. A method as recited in any preceding claim, further comprising:
applying said jacket (14, 22) so that said strands proximate said end of said cable (10) are centered within said outer jacket diameter, so that said strands proximate said end of said cable (10) are centered in said passage diameter.

10. A method as recited in any preceding claim, wherein said jacket (14, 22) is only applied over a short length.

11. A method as recited in claim 11, providing said anchor (18) with a mechanical compressing feature positioning said anchor (18) over said end of said cable (10); and actuating said mechanical compressing feature to lock said anchor (18) over said jacket (14,22) on said end of said cable (10).

12. A method as recited in claim 1, further comprising:
after said length of strands has been locked within said internal passage, removing said jacket (14,22).

13. A method allowing the use of a single type of anchor (18) to form a plurality ofterminations on the ends of a plurality of cables having varying diameters, each of said cables being comprised of strands, comprising:
a. providing a single type of anchor (18) having an internal passage with a passage diameter;
b. providing a plurality of cables, each having a different diameter;
c. applying a jacket (14, 22) over a portion of each of said plurality of cables proximate said ends of each of said plurality of cables which are to be terminated; and
d. varying the thickness of said jacket (14, 22) along said portion of each of said plurality of cables proximate said ends of said cables which are to be terminated so that the external diameter of said jacket (14, 22) is uniform for all of said plurality of cables, and so that said external diameter of said jacket (14, 22) fits snugly within said passage diameter.

14. A method as recited in claim 13, further comprising:
a. exposing a length of said strands of each of said plurality of cables proximate each of said ends which are to be terminated; and
b. locking each of said lengths of exposed strands within said internal passage of one of said anchors (18).

15. A method as recited in claim 14, wherein said step of locking each of said lengths of exposed strands within said internal passage of said anchor (18) is accomplished by infusing said strands with liquid potting compound and allowing said liquid potting compound to harden into a solid while said strands lie within said internal passage.

16. A method as recited in claim 15, wherein said external diameter of said jacket (14, 22) fits tightly enough within said internal passage to prevent said liquid potting compound seeping past said jacket (14, 22).

17. A method as recited in claim 15 or 16, wherein said liquid potting compound is a cross-linking adhesive.

18. A method as recited in any one of claims 14 to 17, further comprising: after each of said lengths of strands has been locked within said internal passage, removing said jackets (14, 22).
